# EUROPEAN PATENT APPLICATION

(11) **EP 4 665 038 A1**
(43) Date of publication of application: **17.12.2025**
(21) Application number: 23920339.1
(22) Date of filing: 06.02.2023
(51) Int. Cl.: H04W 72/0446

(54) **FEEDBACK METHOD AND APPARATUS, DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2023/074671
(87) International publication number: WO 2024/164124

(57) **Abstract**

The present disclosure provides a feedback method and apparatus, a device, and a storage medium, the method comprising: determining configuration information, the configuration information being used to configure a time interval between each adjacent time point of a number M of time points, M being a positive integer; feeding back signal processing results for the M time points to a positioning server on the basis of the configuration information, the M time points being determined by a signal measurement node on the basis of the configuration information. Using the method of the present disclosure, when the signal measurement node needs to feed back signal processing results for multiple time points, which specific time points require signal processing result feedback can be determined, thereby realizing successful feedback of the signal processing results and guaranteeing stable execution of a positioning process.

## Description

### TECHNICAL FIELD

The present disclosure relates to the field of communication technologies, and in particular relates to a feedback method, an apparatus, a device and a storage medium.

### BACKGROUND

In a new radio (NR) system, the artificial intelligence (AI)-based positioning is introduced to improve the positioning accuracy. When the Al-based positioning is performed, a signal measurement node usually needs to feed back signal processing results at multiple time points to a positioning server, so that the positioning server may determine the required positioning location based on the signal processing results at the multiple time points. However, currently no method for determining the above-mentioned multiple time points exists.

### SUMMARY

Embodiments of the present disclosure provide a feedback method, an apparatus, a device and a storage medium.

In a first aspect, embodiments of the present disclosure provide a feedback method, including: determining configuration information, where the configuration information is used to configure a time interval between adjacent time points in *M* time points, and *M* is a positive integer; and feeding back signal processing results at the *M* time points to a positioning server based on the configuration information, where the *M* time points are determined by the signal measurement node based on the configuration information.

In the present disclosure, when the signal measurement node needs to feed back the signal processing results at multiple time points, the signal measurement node may determine the configuration information and determine specific time points at which the signal processing results need to be fed back based on the configuration information, thereby achieving the successful feedback of the signal processing results and ensuring the stable execution of the positioning process.

In a second aspect, embodiments of the present disclosure provide a feedback method, including: sending configuration information to a signal measurement node, where the configuration information is used to configure a time interval between adjacent time points in *M* time points, and *M* is a positive integer; and receiving signal processing results at the *M* time points fed back by the signal measurement node, where the *M* time points are determined by the signal measurement node based on the configuration information.

In a third aspect, embodiments of the present disclosure provide a communication device, which includes a processing module and a transceiver module. The processing module is configured to determine configuration information, where the configuration information is used to configure a time interval between adjacent time points in *M* time points, and *M* is a positive integer. The transceiver module is configured to feed back signal processing results at the *M* time points to a positioning server based on the configuration information, where the *M* time points are determined by the signal measurement node based on the configuration information.

In a fourth aspect, embodiments of the present disclosure provide a communication device, which includes a transceiver module configured to send configuration information to a signal measurement node, where the configuration information is used to configure a time interval between adjacent time points in *M* time points, and *M* is a positive integer. The transceiver module is further configured to receive signal processing results at the *M* time points fed back by the signal measurement node, where the *M* time points are determined by the signal measurement node based on the configuration information.

In a fifth aspect, embodiments of the present disclosure provide a communication device, which includes a processor. When the processor calls a computer program in a memory, the method described above in the first or second aspect is performed.

In a sixth aspect, embodiments of the present disclosure provide a communication device, which includes a processor and a memory having stored therein a computer program. The processor executes the computer program stored in the memory, so that the communication device performs the method described above in the first or second aspect.

In a seventh aspect, embodiments of the present disclosure provide a communication device, which includes a processor and an interface circuit configured to receive code instructions and transmit the code instructions to the processor. The processor is configured to run the code instructions to cause the communication device to perform the method described above in the first or second aspect.

In an eighth aspect, embodiments of the present disclosure provide a communication system. The communication system includes the communication device described in any one of the third or fourth aspect, or the communication system includes the communication device described in the fifth aspect, the communication device described in the sixth aspect, or the communication device described in the seventh aspect.

In a ninth aspect, embodiments of the present disclosure provide a computer-readable storage medium for storing instructions used by the above-mentioned network device that, when executed, cause the terminal to perform the method described above in the first or second aspect.

In a tenth aspect, embodiments of the present disclosure provide a computer program product including a computer program that, when run on a computer, causes the computer to perform the method described above in the first or second aspect.

In an eleventh aspect, the present disclosure provides a chip system, which includes at least one processor and an interface, configured to support a network device to implement the functions involved in the first or second aspect, for example, determining or processing at least one of data and information involved in the above method. In a possible design, the chip system further includes a memory, which is configured to store desired computer programs and data for a source and secondary nodes. The chip system may be composed of a chip, or may include a chip and other discrete devices.

In a twelfth aspect, the present disclosure provides a computer program that, when run on a computer, causes the computer to perform the method described above in the first or second aspect.

### BRIEF DESCRIPTION OF THE DRAWINGS

These and/or other aspects and advantages of the present disclosure will become apparent and more readily appreciated from the following descriptions of embodiments made with reference to the drawings.
FIG. 1 is a schematic diagram of an architecture of a communication system provided in an embodiment of the present disclosure.
FIG. 2 is a schematic flowchart of a feedback method provided in an embodiment of the present disclosure.
FIG. 3 is a schematic flowchart of a feedback method provided in another embodiment of the present disclosure.
FIG. 4 is a schematic flowchart of a feedback method provided in yet another embodiment of the present disclosure.
FIG. 5 is a schematic flowchart of a feedback method provided in still another embodiment of the present disclosure.
FIG. 6 is a schematic flowchart of a feedback method provided in still another embodiment of the present disclosure.
FIG. 7 is a schematic flowchart of a feedback method provided in still another embodiment of the present disclosure.
FIG. 8 is a schematic block diagram of a communication device provided in an embodiment of the present disclosure.
FIG. 9 is a schematic block diagram of a communication device provided in another embodiment of the present disclosure.
FIG. 10 is a schematic block diagram of a communication device provided in an embodiment of the present disclosure.
FIG. 11 is a schematic block diagram of a chip provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the embodiments of the disclosure. Instead, they are merely examples of apparatuses and methods consistent with some aspects of the embodiments of the disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" or "in a case where" may be construed to mean "when" or "upon" or "in response to determining" depending on the context.

Reference will be made in detail to the embodiments of the present disclosure, examples of which are shown in the drawings. The same or similar elements are denoted by the same or similar reference numerals throughout the descriptions. The embodiments described herein with reference to the drawings are illustrative, and used to explain the present disclosure. The embodiments shall not be construed to limit the present disclosure.

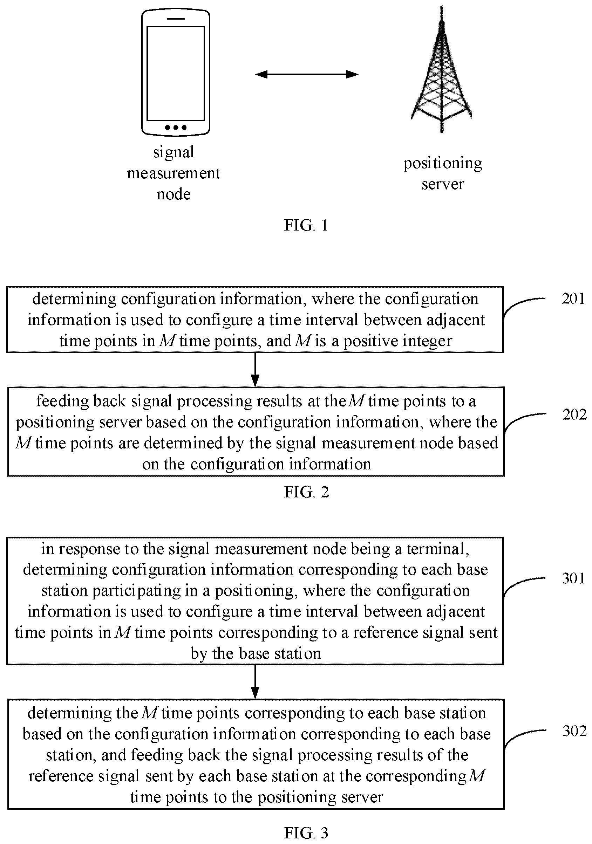

Reference is made to FIG. 1, which is a schematic diagram of the architecture of a communication system provided in an embodiment of the present disclosure. The communication system may include, but is not limited to, a signal measurement node and a positioning server, where the signal measurement node and the positioning server are different devices, the signal measurement node may be a terminal or a network device, and the positioning server may be a network device. Optionally, the number and form of devices shown in FIG. 1 are used as examples only, but do not constitute a limitation on the embodiments of the present disclosure. In actual applications, one or more signal measurement nodes or one or more positioning servers may be included. Optionally, the communication system shown in FIG. 1 includes, for example, one signal measurement node, which is a terminal; and one positioning server, which is a network device.

It should be noted that the technical solution in this embodiment of the present disclosure may be applied to various communication systems, such as a long term evolution (LTE) system, a 5th generation (5G) mobile communication system, a 5G new radio (NR) system, or other new future mobile communication systems.

The terminal in the embodiments of the present disclosure may be an entity on the user side for receiving or transmitting signals, such as a mobile phone. The terminal may also be called a terminal device, a user equipment (UE), a mobile station (MS), a mobile terminal (MT), etc. The terminal may be a car with a communication function, a smart car, a mobile phone, a wearable device, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, a wireless terminal in a smart home, or the like. The specific technology and specific device form adopted by the terminal are not limited in the embodiments of the present disclosure.

The network device in the embodiments of the present disclosure may be an entity on the network side for transmitting or receiving signals. For example, the network device may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the network device are not limited in the embodiments of the present disclosure. A master node (MN) or a secondary node (SN) provided in an embodiment of the present disclosure may be composed of a central unit (CU) and a distributed unit (DU), in which the CU may also be referred to as a control unit. The CU-DU structure may be used to split the protocol layer of the network device, such as the base station, and the functions of some protocol layers are placed in the CU for centralized control, and the functions of some or all of the remaining protocol layers are distributed in the DU, and the DU is centrally controlled by the CU.

It may be understood that the communication system described in this embodiment of the present disclosure is for the purpose of more clearly illustrating the technical solution of the embodiments of the present disclosure, but does not constitute a limitation on the technical solution provided in the embodiments of the present disclosure. Those of ordinary skill in the art may know that with the evolution of the system architecture and the emergence of new business scenarios, the technical solution provided in this embodiment of the present disclosure is also applicable to similar technical problems.

The feedback method, apparatus, device and storage medium provided in the embodiments of the present disclosure are described in detail below with reference to the accompanying drawings.

It should be noted that in the present disclosure, the feedback method provided in any embodiment may be executed alone, and any implementation in an embodiment may also be executed alone, or executed together with other embodiments or possible implementations in other embodiments, and may also be executed together with any technical solution in the related technology.

FIG. 2 is a flow chart of a feedback method provided in an embodiment of the present disclosure. The method is performed by a signal measurement node. As shown in FIG. 2, the feedback method may include the following steps.

At step 201, configuration information is determined, where the configuration information is used to configure a time interval between adjacent time points in *M* time points, and *M* is a positive integer.

In an embodiment of the present disclosure, the method in the present disclosure may be applied to an AI positioning process.

In an embodiment of the present disclosure, the above-mentioned "*M* time points" may be time points corresponding to signal processing results that the signal measurement node needs to feed back to a positioning device. In other words, the "*M* time points" may indicate that the signal measurement node needs to feed back the signal processing results at the *M* time points to the positioning device.

Optionally, in an embodiment of the present disclosure, the above-mentioned signal processing results may be obtained by the signal measurement node after processing the signal measurement results measured by the signal measurement node. Optionally, the signal measurement results may be obtained by the signal measurement node by measuring a reference signal it receives, and the reference signal may be a positioning reference signal (PRS) or a sounding reference signal (SRS). Optionally, in an embodiment of the present disclosure, the signal processing results at the above-mentioned *M* time points may be used to determine the positioning location of the device to be positioned to achieve the positioning. The device to be positioned may be a signal measurement node, or may be a device that sends a reference signal.

Optionally, in an embodiment of the present disclosure, the manner for determining the configuration information may include at least one of: receiving the configuration information sent by the positioning server, determining the configuration information based on a protocol agreement, determining the configuration information based on a pre-definition, or determining the configuration information based on a pre-configuration.

Optionally, in an embodiment of the present disclosure, the configuration information may include a time interval parameter corresponding to the adjacent time points, and the time interval parameter indicates that the time interval between the adjacent time points is a product of the time interval parameter and a basic time unit. The basic time unit may be obtained by any one of a protocol agreement, a configuration of the positioning server, or an autonomous determination by the signal measurement node.

For example, in an embodiment of the present disclosure, assuming that the basic time unit is *Tc* as agreed in a protocol, and the time interval parameter included in the configuration information is *K,* then the interval between adjacent nodes is *K* × *Tc.*

Optionally, in another embodiment of the present disclosure, the configuration information may include specific time interval values corresponding to the adjacent time points. For example, assuming that the value of *M* is 3, the configuration information may include a time interval value between a first time point and a second time point, and a time interval value between the second time point and a third time point.

Optionally, in an embodiment of the present disclosure, the time intervals between different adjacent time points may be the same. In an embodiment of the present disclosure, the time intervals between different adjacent time points may be different. For example, the time interval between the first time point and the second time point may be the same as or different from the time interval between the second time point and the third time point.

Optionally, in an embodiment of the present disclosure, when the time intervals between different adjacent time points are different, the time interval between adjacent time points within a specific time range may be made smaller than the time interval between adjacent time points outside the specific time range. Optionally, the specific time range may include a first path arrival time of the reference signal to be measured arriving at the signal measurement node, where the specific time range may be understood as the time near the first path arrival time of the reference signal to be measured arriving at the signal measurement node.

Moreover, the reason why "the time interval between adjacent time points within the specific time range is smaller than the time interval between adjacent time points outside the specific time range" is introduced below.

Specifically, it may be seen from the foregoing content that the process of determining the signal processing results at the above-mentioned *M* time points is: measuring the reference signals received at the *M* time points to obtain signal measurement results, and then processing the signal measurement results at the *M* time points to obtain the signal processing results at the *M* time points. Furthermore, the signal processing results at the *M* time points are mainly used to subsequently determine the positioning location of the device to be positioned to achieve the positioning. It should be understood that for the signal measurement node, there may be a noise signal before it starts to receive the reference signal and after it has received the reference signal. Moreover, in the subsequent positioning process, accurate positioning is mainly achieved based on the signal processing results corresponding to the reference signal (i.e., the effective signal), whereas the signal processing results corresponding to the noise signal may not be used to achieve accurate positioning. Therefore, it should be ensured that the M time points finally selected are included as much as possible in a time period during which the signal measurement node receives the reference signal, that is, it should be ensured as much as possible that at the *M* selected time points, the signal measurement node receives the reference signal rather than the noise signal, so as to ensure that accurate positioning may be subsequently achieved based on the signal processing results at the *M* time points.

Based on this, in the present disclosure, by including the first path arrival time of the reference signal to be measured arriving at the signal measurement node in the specific time range, the specific time range includes the reception time of the reference signal by the signal measurement node. At the same time, the time interval between adjacent time points within the specific time range is smaller than the time interval between adjacent time points outside the specific time range. That is, the distribution of time points within the specific time range is denser, and the distribution of time points outside the specific time range is sparser. This ensures that more of the *M* time points are distributed during the reception time period of the reference signal by the signal measurement node, thereby ensuring that accurate positioning may be subsequently achieved based on the signal processing results at the *M* time points. Furthermore, by making the distribution of time points outside the specific time range sparser, the required amount of measurement may be reduced, thereby reducing the amount of measurement and improving the positioning efficiency while ensuring the subsequent positioning accuracy.

At step 202, signal processing results at the *M* time points are fed back to a positioning server based on the configuration information, where the *M* time points are determined by the signal measurement node based on the configuration information.

Optionally, in an embodiment of the present disclosure, the signal measurement node may first determine *M* time points based on the configuration information, and then feed back the signal processing results at the *M* time points to the positioning server.

Optionally, in an embodiment of the present disclosure, the method for determining the *M* time points based on the configuration information may include: first determining the position of the first time point, for example, determining the position of the first time point based on at least one of a protocol agreement, a configuration of a positioning server, and an autonomous determination by a signal measurement node; and then determining the second time point, the third time point, ..., the *M*^{th} time point in sequence based on the value of *M* and time interval parameters corresponding to any adjacent time points.

Optionally, in an embodiment of the present disclosure, the signal measurement node feeds back the signal processing results at the *M* time points to the positioning server, so that the positioning server may determine the positioning location of the device to be positioned based on the signal processing results at the *M* time points, thereby achieving accurate positioning. The device to be positioned may be a signal measurement node, or the device to be positioned may also be a device that sends a reference signal.

In summary, in the feedback method provided in these embodiments of the present disclosure, the signal measurement node may determine configuration information, where the configuration information may be used to configure the time interval between adjacent time points in *M* time points, and *M* is a positive integer. Afterwards, the signal measurement node may feed back the signal processing results at the *M* time points to the positioning server based on the configuration information. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

FIG. 3 is a flow chart of a feedback method provided in an embodiment of the present disclosure. The method is performed by a signal measurement node. As shown in FIG. 3, the feedback method may include the following steps.

At step 301, in response to the signal measurement node being a terminal, configuration information corresponding to each base station participating in a positioning is determined.

Optionally, in an embodiment of the present disclosure, a terminal and multiple base stations usually participate in the positioning process, such as an AI positioning process. The device to be positioned may be a terminal or any base station among the multiple base stations, and the signal measurement node may be a terminal or each base station. Optionally, when the signal measurement node is a terminal, each base station may send a reference signal (such as a PRS) to the terminal, so that the terminal measures and processes the reference signal sent by each base station.

Optionally, in an embodiment of the present disclosure, when the signal measurement node is a terminal, the terminal may determine the configuration information corresponding to each base station, and the configuration information is used to configure the time interval between adjacent time points in the *M* time points corresponding to the reference signal sent by the base station. Therefore, the terminal may determine the *M* time points corresponding to the reference signal sent by each base station based on the configuration information corresponding to each base station, so that the signal processing results of the reference signal sent by each base station at the *M* time points may be subsequently fed back to the positioning device.

Optionally, in an embodiment of the present disclosure, the above-mentioned *"M* time points corresponding to the reference signal sent by the base station" may be understood as time points at which the terminal needs to feed back the signal processing results for the reference signal sent by the base station. For example, assuming that the *M* time points corresponding to the reference signal sent by base station #1 are time point #1, time point #2, time point #3, ..., time point #M, it means that for the reference signal sent by base station #1, the terminal needs to feed back to the positioning device the signal processing result corresponding to the reference signal sent by base station #1 at time point #1, the signal processing result corresponding to the reference signal sent by base station #1 at time point #2, the signal processing result corresponding to the reference signal sent by base station #1 at time point #3, ..., the signal processing result corresponding to the reference signal sent by base station #1 at time point #M. Assuming that the *M* time points corresponding to the reference signal sent by base station #2 are time point #3, time point #4, time point #5, ..., it means that for the reference signal sent by base station #2, the terminal needs to feed back to the positioning device the signal processing result corresponding to the reference signal sent by base station #2 at time point #3, the signal processing result corresponding to the reference signal sent by base station #2 at time point #4, the signal processing result corresponding to the reference signal sent by base station #2 at time point #4...

Optionally, in an embodiment of the present disclosure, the configuration information corresponding to different base stations may be the same or different. For example, the values of *M* in the configuration information corresponding to different base stations may be the same or different, and/or the time intervals between adjacent time points in the configuration information corresponding to different base stations may be the same or different.

In addition, for other detailed introductions about the configuration information (such as the manner for determining the configuration information, and the like), reference may be made to the description of the aforementioned embodiments.

At step 302, *M* time points corresponding to each base station are determined based on the configuration information corresponding to each base station, and the signal processing results of the reference signal sent by each base station at the corresponding *M* time points are fed back to the positioning server.

For example, in an embodiment of the present disclosure, assuming that the *M* time points corresponding to base station #1 are time point #1, time point #2, time point #3, ..., time point #M, the signal measurement node may feed back to the positioning device the signal processing results of the reference signal sent by base station #1 at time point #1, time point #2, time point #3, ..., time point #M respectively. Assuming that the *M* time points corresponding to the reference signal sent by base station #2 are time point #3, time point #4, time point #5, ..., time point #M+2, the signal measurement node may feed back to the positioning device the signal processing results of the reference signal sent by base station #2 at time point #3, time point #4, time point #5, ..., time point #M+2 respectively.

Optionally, in an embodiment of the present disclosure, the signal processing results of the reference signal sent by each base station at the corresponding *M* time points are fed back to the positioning server, so that the positioning server may determine the positioning location of the device to be positioned based on the signal processing results of the reference signal sent by each base station at the corresponding *M* time points, thereby achieving accurate positioning. The device to be positioned may be the aforementioned terminal serving as the signal measurement node, or the device to be positioned may also be any base station.

In summary, in the feedback method provided in these embodiments of the present disclosure, in response to the signal measurement node needing to feed back the signal processing results at the *M* time points to the positioning server, the signal measurement node may determine configuration information, where the configuration information may be used to configure the time interval between adjacent time points in the *M* time points, and *M* is a positive integer. Afterwards, the signal measurement node may determine *M* time points based on the configuration information, and feed back the signal processing results at the *M* time points to the positioning server. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

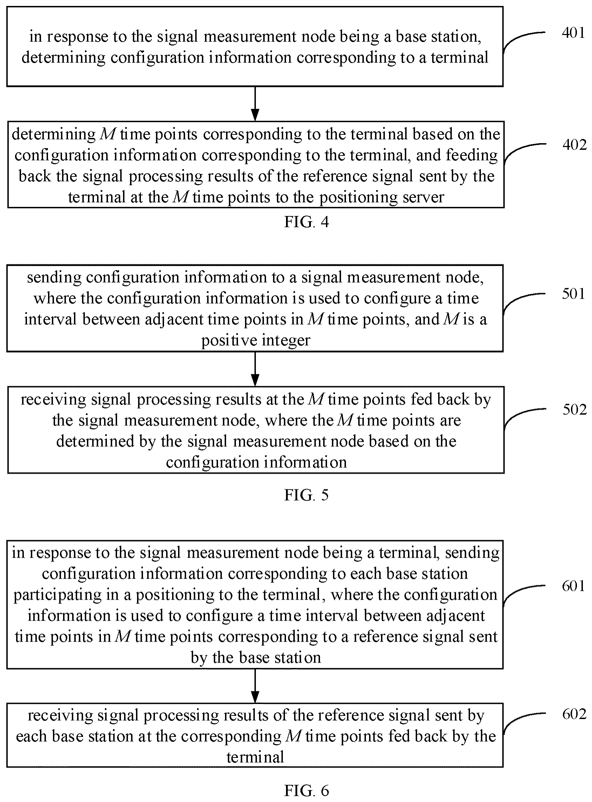

FIG. 4 is a flow chart of a feedback method provided in an embodiment of the present disclosure. The method is performed by a signal measurement node. As shown in FIG. 4, the feedback method may include the following steps.

At step 401, in response to the signal measurement node being a base station, configuration information corresponding to a terminal is determined.

Optionally, in an embodiment of the present disclosure, a terminal and multiple base stations usually participate in the positioning process, such as an AI positioning process. The device to be positioned may be a terminal or any base station among the multiple base stations, and the signal measurement node may be a terminal or each base station. Optionally, when the signal measurement node is a base station, the terminal may send a reference signal (such as an SRS) to each base station, so that each base station measures and processes the reference signal sent by the terminal.

Based on this, in an embodiment of the present disclosure, when the signal measurement node is a base station, the terminal may determine the configuration information corresponding to the terminal, and the configuration information is used to configure the time interval between adjacent time points in the *M* time points corresponding to the reference signal sent by the terminal. Therefore, each base station may determine the *M* time points corresponding to the reference signal sent by the terminal based on the configuration information, so that the signal processing results of the reference signal sent by the terminal at the *M* time points may be subsequently fed back to the positioning device.

Optionally, in an embodiment of the present disclosure, the above-mentioned *"M* time points corresponding to the reference signal sent by the terminal" may be understood as time points at which the base station needs to feed back the signal processing results for the reference signal sent by the terminal. For example, assuming that the *M* time points corresponding to the reference signal sent by the terminal are time point #1, time point #2, time point #3, ..., time point #M, it means that for the reference signal sent by the terminal, the base station needs to feed back to the positioning device the signal processing result corresponding to the reference signal sent by the terminal at time point #1, the signal processing result corresponding to the reference signal sent by the terminal at time point #2, the signal processing result corresponding to the reference signal sent by the terminal at time point #3, ..., the signal processing result corresponding to the reference signal sent by the terminal at time point #M.

In addition, for other detailed introductions on the configuration information, reference may be made to the description of the aforementioned embodiments.

At step 402, *M* time points corresponding to the terminal are determined based on the configuration information corresponding to the terminal, and the signal processing results of the reference signal sent by the terminal at the *M* time points are fed back to the positioning server.

For example, in an embodiment of the present disclosure, assuming that the *M* time points corresponding to terminal #1 are time point #1, time point #2, time point #3, ..., time point #M, the signal measurement node may feed back to the positioning device the signal processing results of the reference signal sent by terminal #1 at time point #1, time point #2, time point #3, ..., time point #M respectively.

Optionally, in an embodiment of the present disclosure, the signal processing results of the reference signal sent by the terminal at *M* time points are fed back to the positioning server, so that the positioning server may determine the positioning location of the device to be positioned based on the signal processing results of the reference signal sent by the terminal at the *M* time points fed back by each base station, thereby achieving accurate positioning. The device to be positioned may be the aforementioned terminal serving as the signal measurement node, or the device to be positioned may also be any base station.

In summary, in the feedback method provided in these embodiments of the present disclosure, in response to the signal measurement node needing to feed back the signal processing results at the *M* time points to the positioning server, the signal measurement node may determine the configuration information, where the configuration information may be used to configure the time interval between adjacent time points in the *M* time points, and *M* is a positive integer. Afterwards, the signal measurement node may determine *M* time points based on the configuration information, and feed back the signal processing results at the *M* time points to the positioning server. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

FIG. 5 is a flow chart of a feedback method provided in an embodiment of the present disclosure. The method is performed by a positioning server. As shown in FIG. 5, the feedback method may include the following steps.

At step 501, configuration information is sent to a signal measurement node, where the configuration information is used to configure a time interval between adjacent time points in *M* time points, and *M* is a positive integer.

At step 502, signal processing results at the *M* time points fed back by the signal measurement node are received, where the *M* time points are determined by the signal measurement node based on the configuration information.

For the detailed introductions about steps 501 to 502, reference may be made to the description of the aforementioned embodiments.

In summary, in the feedback method provided in this embodiment of the present disclosure, the positioning server may send configuration information to the signal measurement node, where the configuration information may be used to configure the time interval between adjacent time points in *M* time points, and *M* is a positive integer; and the positioning server may receive the signal processing results at the *M* time points determined by the signal measurement node based on the configuration information. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

FIG. 6 is a flow chart of a feedback method provided in an embodiment of the present disclosure. The method is performed by a positioning server. As shown in FIG. 6, the feedback method may include the following steps.

At step 601, in response to the signal measurement node being a terminal, configuration information corresponding to each base station participating in a positioning is sent to the terminal, where the configuration information is used to configure a time interval between adjacent time points in *M* time points corresponding to a reference signal sent by the base station.

The configuration information corresponding to different base stations may be the same or different.

At step 602, signal processing results of the reference signal sent by each base station at the corresponding *M* time points fed back by the terminal are received.

For the detailed introductions about steps 601 to 602, reference may be made to the description of the aforementioned embodiments.

In summary, in the feedback method provided in this embodiment of the present disclosure, in response to the signal measurement node needing to feed back the signal processing results at the *M* time points to the positioning server, the positioning server may send configuration information to the signal measurement node, where the configuration information may be used to configure the time interval between adjacent time points in the *M* time points, and *M* is a positive integer; and the signal measurement node may determine the *M* time points based on the configuration information, and feed back the signal processing results at the *M* time points to the positioning server. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

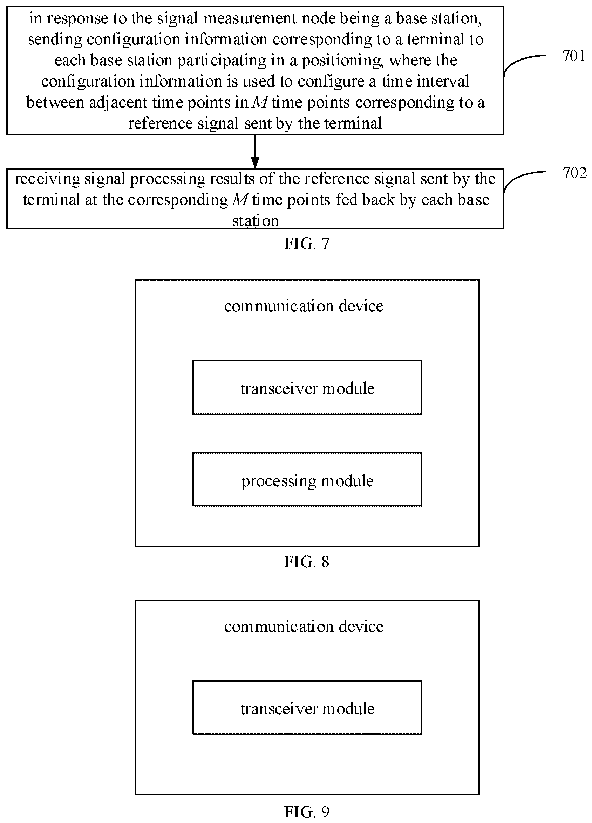

FIG. 7 is a flow chart of a feedback method provided in an embodiment of the present disclosure. The method is performed by a positioning server. As shown in FIG. 7, the feedback method may include the following steps.

At step 701, in response to the signal measurement node being a base station, configuration information corresponding to a terminal is sent to each base station participating in a positioning, where the configuration information is used to configure a time interval between adjacent time points in *M* time points corresponding to a reference signal sent by the terminal.

At step 702, signal processing results of the reference signal sent by the terminal at the corresponding *M* time points fed back by each base station are received.

For the detailed introductions about steps 701 to 702, reference may be made to the description of the aforementioned embodiment.

In summary, in the feedback method provided in this embodiment of the present disclosure, in response to the signal measurement node needing to feed back the signal processing results at the *M* time points to the positioning server, the positioning server may send configuration information to the signal measurement node, where the configuration information may be used to configure the time interval between adjacent time points in the *M* time points, and *M* is a positive integer; and the signal measurement node may determine the *M* time points based on the configuration information, and feed back the signal processing results at the *M* time points to the positioning server. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

An example introduction to the method in the present disclosure is as follows.
(1) A method for feeding back positioning measurement results is applied to a positioning signal measurement node. In response to measurement feedback results including information at *M* time sampling points, the method includes determining a time interval between adjacent time sampling points.
   For example, if a channel impulse response needs to be fed back, the real and imaginary parts of a measured signal at multiple time sampling points need to be fed back. If the power distribution needs to be fed back, the power of the measured signal at multiple time sampling points needs to be fed back.
(2) Based on (1), the time intervals between adjacent time sampling points are the same.
(3) Based on (2), the time interval is based on a preset value.
(4) Based on (2), configuration information from a positioning server is received, where the configuration information includes a determination parameter, and the determination parameter is used to determine the time interval.
(5) Based on (1), the time intervals between adjacent time sampling points are different.
(6) Based on (5), a configuration message from a positioning server is received, where the configuration message includes a time interval corresponding to time sampling points.
   Specifically, the positioning server may estimate the first path arrival time of a positioning reference signal arriving at the measurement node. The corresponding interval between time sampling points near the estimated first path arrival time is smaller, while the corresponding interval between time sampling points outside the first path arrival time range may be larger.
(7) Based on (1), in response to the positioning measurement results including the measurement results of positioning reference information for N base stations, the method further includes determining the time interval of adjacent time sampling points corresponding to each of the N base stations.
(8) Based on (7), the time intervals corresponding to the N base stations are the same.
(9) Based on (8), the time interval is determined based on a pre-definition.
(10) Based on (8), configuration information from a positioning server is received, and the time interval is determined based on the configuration information.
(11) Based on (7), the time intervals corresponding to the N base stations are different.
(12) Based on (11), a configuration message from a positioning server is received, where the configuration message includes an independent time interval configuration for each base station.

FIG. 8 is a schematic block diagram of a communication device provided in an embodiment of the present disclosure. As shown in FIG. 8, the communication device includes a processing module configured to determine configuration information, where the configuration information is used to configure a time interval between adjacent time points in *M* time points, and *M* is a positive integer; and a transceiver module configured to feed back signal processing results at the *M* time points to a positioning server based on the configuration information, where the *M* time points are determined by the signal measurement node based on the configuration information.

In summary, in the communication device provided in this embodiment of the present disclosure, the signal measurement node may determine configuration information, where the configuration information may be used to configure the time interval between adjacent time points in *M* time points, and *M* is a positive integer. Afterwards, the signal measurement node may feed back the signal processing results at the *M* time points to the positioning server based on the configuration information. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

Optionally, in an embodiment of the present disclosure, the time intervals between different adjacent time points are identical.

Optionally, in an embodiment of the present disclosure, the time intervals between different adjacent time points are different.

Optionally, in an embodiment of the present disclosure, the processing module is further configured to perform at least one of: determining the configuration information based on a protocol agreement, determining the configuration information based on a pre-definition, or determining the configuration information based on a transmission from the positioning server.

Optionally, in an embodiment of the present disclosure, the configuration information comprises a time interval parameter corresponding to the adjacent time points, and the time interval parameter indicates that the time interval between the adjacent time points is a product of the time interval parameter and a basic time unit, where the basic time unit is obtained by any one of a protocol agreement, a configuration of the positioning server, or an autonomous determination by the signal measurement node.

Optionally, in an embodiment of the present disclosure, the configuration information comprises a time interval value corresponding to the adjacent time points.

Optionally, in an embodiment of the present disclosure, in a case where the time intervals between different adjacent time points are different, a time interval between adjacent time points within a specific time range is smaller than a time interval between adjacent time points outside the specific time range.

Optionally, in an embodiment of the present disclosure, the specific time range comprises a first path arrival time of a reference signal to be measured arriving at the signal measurement node.

Optionally, in an embodiment of the present disclosure, in response to the signal measurement node being a terminal, the terminal feeds back to the positioning server the signal processing results of reference signals respectively sent by base stations participating in a positioning at the *M* time points; and the processing module is further configured to determine the configuration information corresponding to each base station participating in the positioning, where the configuration information is used to configure a time interval between adjacent time points in the *M* time points corresponding to a reference signal sent by the base station.

Optionally, in an embodiment of the present disclosure, the configuration information corresponding to different base stations is identical or different.

Optionally, in an embodiment of the present disclosure, in response to the signal measurement node being a base station, the base station feeds back to the positioning server the signal processing results of a reference signal sent by a terminal at the *M* time points; and the processing module is further configured to determine the configuration information corresponding to the terminal, where the configuration information is used to configure a time interval between adjacent time points in the *M* time points corresponding to the reference signal sent by the terminal.

FIG. 9 is a schematic block diagram of a communication device provided in an embodiment of the present disclosure. As shown in FIG. 9, the communication device includes a transceiver module configured to send configuration information to a signal measurement node, where the configuration information is used to configure a time interval between adjacent time points in *M* time points, and *M* is a positive integer. The transceiver module is further configured to receive signal processing results at the *M* time points fed back by the signal measurement node, where the *M* time points are determined by the signal measurement node based on the configuration information.

In summary, in the communication device provided in this embodiment of the present disclosure, the positioning server may send configuration information to the signal measurement node, where the configuration information may be used to configure the time interval between adjacent time points in *M* time points, and *M* is a positive integer; and the positioning server may receive the signal processing results at the *M* time points determined by the signal measurement node based on the configuration information. It may be seen that when the signal measurement node needs to feed back the signal processing results at multiple time points, the method disclosed in the present disclosure may be used to determine specific time points at which the signal processing results need to be fed back, thereby achieving the successful feedback of the signal processing results and ensuring the stable execution of the positioning process.

Optionally, in an embodiment of the present disclosure, the time intervals between different adjacent time points are identical.

Optionally, in an embodiment of the present disclosure, the time intervals between different adjacent time points are different.

Optionally, in an embodiment of the present disclosure, the configuration information comprises a time interval parameter corresponding to the adjacent time points, and the time interval parameter indicates that the time interval between the adjacent time points is a product of the time interval parameter and a basic time unit, where the basic time unit is obtained by any one of a protocol agreement, a configuration of the positioning server, or an autonomous determination by the signal measurement node.

Optionally, in an embodiment of the present disclosure, the configuration information comprises a time interval value corresponding to the adjacent time points.

Optionally, in an embodiment of the present disclosure, in a case where the time intervals between different adjacent time points are different, a time interval between adjacent time points within a specific time range is smaller than a time interval between adjacent time points outside the specific time range.

Optionally, in an embodiment of the present disclosure, the specific time range comprises a first path arrival time of a reference signal to be measured arriving at the signal measurement node.

Optionally, in an embodiment of the present disclosure, in response to the signal measurement node being a terminal, the terminal feeds back to the positioning server the signal processing results of reference signals respectively sent by base stations participating in a positioning at the *M* time points; and the transceiver module is further configured to send, to the terminal, the configuration information corresponding to each base station participating in the positioning, where the configuration information is used to configure a time interval between adjacent time points in the *M* time points corresponding to a reference signal sent by the base station.

Optionally, in an embodiment of the present disclosure, the configuration information corresponding to different base stations is identical or different.

Optionally, in an embodiment of the present disclosure, in response to the signal measurement node being a base station, the base station feeds back to the positioning server the signal processing results of a reference signal sent by a terminal at the *M* time points; and the transceiver module is further configured to send, to each base station participating in a positioning, the configuration information corresponding to the terminal, where the configuration information is used to configure a time interval between adjacent time points in the *M* time points corresponding to the reference signal sent by the terminal.

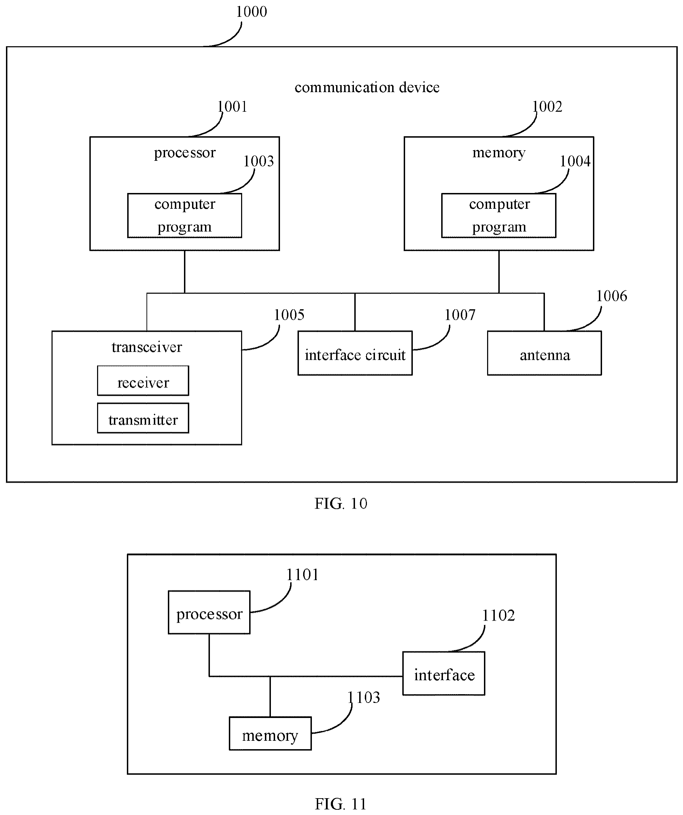

Reference is made to FIG. 10, which is a schematic block diagram of a communication device 1000 provided in an embodiment of the present disclosure. The communication device 1000 may be a network device or a terminal, or may be a chip, a chip system, a processor or the like supporting the network device or the terminal to implement the above-mentioned methods. The communication device 1000 may be configured to implement the methods as described in the above-mentioned method embodiments. For details, reference may be made to the description in the above-mentioned method embodiments.

The communication device 1000 may include one or more processors 1001. The processor 1001 may be a general-purpose processor, a special-purpose processor, or the like. The processor 1001 may be, for example, a baseband processor or a central processor. The baseband processor may be configured to process a communication protocol and communication data, and the central processor may be configured to control a communication device (such as a base station, a baseband chip, a terminal, a terminal chip, a DU, a CU, or the like), execute a computer program, and process data of the computer program.

Optionally, the communication device 1000 may further include one or more memories 1002 on which a computer program 1004 may be stored, and the processor 1001 is configured to execute the computer program 1004 to cause the communication device 1000 to perform the methods as described in the above-mentioned method embodiments. Optionally, the memory 1002 may also have data stored therein. The communication device 1000 and the memory 1002 may be provided independently or integrated together.

Optionally, the communication device 1000 may further include a transceiver 1005 and an antenna 1006. The transceiver 1005 may be referred to as a transceiving unit, a transceiving device, a transceiving circuit or the like for implementing a transceiving function. The transceiver 1005 may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device 1000 may further include one or more interface circuits 1007. The interface circuit 1007 is configured to receive and transmit code instructions to the processor 1001. The processor 1001 is configured to run the code instructions to enable the communication device 1000 to perform the methods described in the above-mentioned method embodiments.

In an implementation, the processor 1001 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1001 may have stored therein the computer program 1003 that, when running on the processor 1001, enables the communication device 1000 to perform the methods described in the above-mentioned method embodiments. The computer program 1003 may be embedded in the processor 1001, in which case the processor 1001 may be implemented by hardware.

In an implementation, the communication device 1000 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a terminal, but the scope of the communication device described in the present disclosure is not limited thereto. The structure of the communication device may not be limited by FIG. 10. The communication device may be a stand-alone device or may be part of a larger device. For example, the communication device may be: (1) a stand-alone IC, or a chip, or a chip system or subsystem; (2) a set of one or more ICs, in which optionally, the set of ICs may further include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

For the case where the communication device may be a chip or a chip system, reference may be made to the schematic block diagram of the chip shown in FIG. 11. The chip shown in FIG. 11 includes a processor 1101 and an interface 1102. The number of processors 1101 may be one or more, and the number of interfaces 1102 may be multiple.

Optionally, the chip further includes a memory 1103 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the functions, but such implementations should not be understood as extending beyond the protection scope of embodiments of the present disclosure.

The present disclosure further provides a readable storage medium having stored therein instructions that, when executed by a computer, cause functions of any one of the above-mentioned method embodiments to be implemented.

The present disclosure further provides a computer program product that, when executed by a computer, causes functions of any one of the above-mentioned method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

The corresponding relationships shown in the tables in the present disclosure may be configured or predefined. The values of signals in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, etc. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the aforementioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

1. A feedback method, performed by a signal measurement node and comprising:
determining configuration information, wherein the configuration information is used to configure a time interval between adjacent time points in *M* time points, and Mis a positive integer; and
feeding back signal processing results at the *M* time points to a positioning server based on the configuration information, wherein the *M* time points are determined by the signal measurement node based on the configuration information.

2. The feedback method according to claim 1, wherein the time intervals between different adjacent time points are identical.

3. The feedback method according to claim 1, wherein the time intervals between different adjacent time points are different.

4. The feedback method according to any one of claims 1 to 3, wherein determining the configuration information comprises at least one of:
determining the configuration information based on a protocol agreement;
determining the configuration information based on a pre-definition; or
determining the configuration information based on a transmission from the positioning server.

5. The feedback method according to any one of claims 1 to 3, wherein the configuration information comprises a time interval parameter corresponding to the adjacent time points, and the time interval parameter indicates that the time interval between the adjacent time points is a product of the time interval parameter and a basic time unit,
wherein the basic time unit is obtained by any one of a protocol agreement, a configuration of the positioning server, or an autonomous determination by the signal measurement node.

6. The feedback method according to any one of claims 1 to 3, wherein the configuration information comprises a time interval value corresponding to the adjacent time points.

7. The feedback method according to claim 3, wherein in a case where the time intervals between different adjacent time points are different, a time interval between adjacent time points within a specific time range is smaller than a time interval between adjacent time points outside the specific time range.

8. The feedback method according to claim 7, wherein the specific time range comprises a first path arrival time of a reference signal to be measured arriving at the signal measurement node.

9. The feedback method according to any one of claims 1 to 3, wherein in response to the signal measurement node being a terminal, the terminal feeds back to the positioning server the signal processing results of reference signals respectively sent by base stations participating in a positioning at the *M* time points;
determining the configuration information comprises:
determining the configuration information corresponding to each base station participating in the positioning, wherein the configuration information is used to configure a time interval between adjacent time points in the *M* time points corresponding to a reference signal sent by the base station.

10. The feedback method according to claim 9, wherein the configuration information corresponding to different base stations is identical or different.

11. The feedback method according to any one of claims 1 to 3, wherein in response to the signal measurement node being a base station, the base station feeds back to the positioning server the signal processing results of a reference signal sent by a terminal at the *M* time points;
determining the configuration information comprises:
determining the configuration information corresponding to the terminal, wherein the configuration information is used to configure a time interval between adjacent time points in the *M* time points corresponding to the reference signal sent by the terminal.

12. A feedback method, performed by a positioning server and comprising:
sending configuration information to a signal measurement node, wherein the configuration information is used to configure a time interval between adjacent time points in *M* time points, and *M* is a positive integer; and
receiving signal processing results at the *M* time points fed back by the signal measurement node, wherein the *M* time points are determined by the signal measurement node based on the configuration information.

13. The feedback method according to claim 12, wherein the time intervals between different adjacent time points are identical.

14. The feedback method according to claim 12, wherein the time intervals between different adjacent time points are different.

15. The feedback method according to any one of claims 12 to 14, wherein the configuration information comprises a time interval parameter corresponding to the adjacent time points, and the time interval parameter indicates that the time interval between the adjacent time points is a product of the time interval parameter and a basic time unit,
wherein the basic time unit is obtained by any one of a protocol agreement, a configuration of the positioning server, or an autonomous determination by the signal measurement node.

16. The feedback method according to any one of claims 12 to 14, wherein the configuration information comprises a time interval value corresponding to the adjacent time points.

17. The feedback method according to claim 14, wherein in a case where the time intervals between different adjacent time points are different, a time interval between adjacent time points within a specific time range is smaller than a time interval between adjacent time points outside the specific time range.

18. The feedback method according to claim 17, wherein the specific time range comprises a first path arrival time of a reference signal to be measured arriving at the signal measurement node.

19. The feedback method according to any one of claims 12 to 14, wherein in response to the signal measurement node being a terminal, the terminal feeds back to the positioning server the signal processing results of reference signals respectively sent by base stations participating in a positioning at the *M* time points;
sending the configuration information to the signal measurement node comprises:
sending, to the terminal, the configuration information corresponding to each base station participating in the positioning, wherein the configuration information is used to configure a time interval between adjacent time points in the *M* time points corresponding to a reference signal sent by the base station.

20. The feedback method according to claim 19, wherein the configuration information corresponding to different base stations is identical or different.

21. The feedback method according to any one of claims 12 to 14, wherein in response to the signal measurement node being a base station, the base station feeds back to the positioning server the signal processing results of a reference signal sent by a terminal at the *M* time points;
sending the configuration information to the signal measurement node comprises:
sending, to each base station participating in a positioning, the configuration information corresponding to the terminal, wherein the configuration information is used to configure a time interval between adjacent time points in the *M* time points corresponding to the reference signal sent by the terminal.

22. A communication device, comprising:
a processing module configured to determine configuration information, wherein the configuration information is used to configure a time interval between adjacent time points in *M* time points, and *M* is a positive integer; and
a transceiver module configured to feed back signal processing results at the *M* time points to a positioning server based on the configuration information, wherein the *M* time points are determined by the signal measurement node based on the configuration information.

23. A communication device, comprising:
a transceiver module configured to send configuration information to a signal measurement node, wherein the configuration information is used to configure a time interval between adjacent time points in *M* time points, and *M* is a positive integer,
wherein the transceiver module is further configured to receive signal processing results at the *M* time points fed back by the signal measurement node, wherein the *M* time points are determined by the signal measurement node based on the configuration information.

24. A communication device, comprising:
a processor; and
a memory having stored therein a computer program,
wherein the processor executes the computer program stored in the memory, so that the communication device performs the feedback method according to any one of claims 1 to 11 or any one of claims 12 to 21.

25. A communication device, comprising:
a processor; and
an interface circuit configured to receive code instructions and transmit the code instructions to the processor,
wherein the processor is configured to run the code instructions to perform the feedback method according to any one of claims 1 to 11 or any one of claims 12 to 21.

26. A computer-readable storage medium for storing instructions that, when executed, cause the feedback method according to any one of claims 1 to 11 or any one of claims 12 to 21 to be implemented.
